# EUROPÄISCHE PATENTSCHRIFT

(11) **EP 3 008 371 B1**
(45) Veröffentlichungstag und Bekanntmachung des Hinweises auf die Patenterteilung: **10.05.2017**
(21) Anmeldenummer: 14730866.2
(22) Anmeldetag: 13.06.2014
(51) Int. Cl.: F16L 39/00, F16L 53/00

(54) **LEITUNGSVERBINDER SOWIE LEITUNGSSATZ FÜR FLUIDISCHE MEDIEN**
LINE CONNECTOR AND LINE SET FOR FLUID MEDIA
RACCORD DE CONDUITES ET JEU DE CONDUITES POUR MILIEUX FLUIDIQUES

(30) Priorität: 14.06.2013 DE 102013106217
(43) Veröffentlichungstag der Anmeldung: 20.04.2016
(73) Patentinhaber: Voss Automotive GmbH, 51688 Wipperfürth (DE)
(72) Erfinder: OBERDÖRFER, Alexander, 42477 Radevormwald (DE); HESS, Jochem-Andreas, 51688 Wipperfürth (DE); KLEIN, Roland, 51688 Wipperfürth (DE); HEINRICHS, Eugen, 51645 Gummersbach (DE); ROSENFELDT, Sascha, 51688 Wipperfürth (DE)
(74) Vertreter: Patent- und Rechtsanwälte Dr. Solf & Zapf
(86) Internationale Anmeldenummer: PCT/EP2014/062413
(87) Internationale Veröffentlichungsnummer: WO 2014/198915

(56) Entgegenhaltungen:
- US-A- 3 986 732
- US-A- 5 628 532
- US-A1- 2003 034 648

## Beschreibung

Die vorliegende Erfindung betrifft einen Leitungsverbinder mit zwei voneinander getrennten Strömungswegen zur Verbindung einer Rohr-in-Rohr Leitung mit einer ersten Leitung, insbesondere für ein Funktionsmedium, und einer zweiten Leitung, insbesondere für ein Temperiermedium, umfassend ein inneres Verbindungselement zum Verbinden eines Innenrohres der Rohr-in-Rohr Leitung, ein äußeres Verbindungselement zum Verbinden eines Außenrohres der Rohr-in-Rohr Leitung, ein erstes Anschlusselement zum Anschließen der ersten Leitung an den Strömungsweg des Innenrohres und ein zweites Anschlusselement zum Anschließen der zweiten Leitung an den Strömungsweg des Außenrohres, wobei das äußere Verbindungselement an einem separaten Rohradapterteil und das zweite Anschlusselement an einer separaten Verbindungshülse jeweils einstückig ausgebildet sind.

Ferner betrifft die Erfindung auch einen Leitungssatz, bestehend aus einer Rohr-in-Rohr Leitung und mindestens einem solchen Leitungsverbinder.

Derartige verwendete Leitungen und Leitungsverbinder sind zum Beispiel aus der WO 2009/053227 A1 bekannt. Diese werden zum Beispiel in der Kraftfahrzeug-Technik insbesondere bei Dieselmotoren bei so genannten SCR-Katalysatoren-Systemen eingesetzt (SCR = selective catalytic reduction), wobei eine wässrige, z. B. 32,5 %-ige Harnstoff-Lösung als NOₓ-Reduktionsadditiv verwendet wird. Dabei ist es ein bekanntes Problem, dass eine solche Harnstoff-Wasser-Lösung auf Grund ihres Gefrierpunktes von etwa -11°C im Falle entsprechend niedriger Umgebungstemperaturen besondere Maßnahmen erfordert, die ein Gefrieren verhindern, um die Funktion des SCR-Katalysators auch bei niedrigen Umgebungstemperaturen zu gewährleisten.

Bei Rohr-in-Rohr Anwendungen in Verbindung mit derartigen Medien, die sich nicht vermischen dürfen, ist eine stoffschlüssige Trennung der beiden Kreisläufe vorzusehen. Die stoffschlüssige Verbindung wird zum Beispiel durch Laserschweißen hergestellt. Um eine Schweißverbindung, insbesondere mittels Laserschweißen, herzustellen, wird ein freier Zugang zum Verbindungsbereich benötigt. Dies ist insbesondere bei der Verbindung des Innenrohres mit den Verbindungselementen des Leitungsverbinders problematisch, insbesondere wenn das Außenrohr aus einem Material hergestellt ist, das sich nicht oder nur sehr eingeschränkt in axialer Länge stauchen lässt.

Der vorliegenden Erfindung liegt die Aufgabe zu Grunde, einen Leitungsverbinder der eingangs beschriebenen Art derart zu verbessern, dass er einerseits konstruktiv einfach gestaltet und auf einfache und wirtschaftliche Weise herstellbar ist, und er andererseits gute Gebrauchseigenschaften, insbesondere bezüglich eines möglichst einfachen und schnellen Anschlusses der für die zwei Medien erforderlichen Leitungen, gewährleistet.

Erfindungsgemäß wird dies durch einen Leitungsverbinder erreicht, bei dem das innere Verbindungselement und das erste Anschlusselement an einem separaten Anschlussteil einstückig ausgebildet sind, wobei die Verbindungshülse im montierten Zustand das Anschlussteil und das Rohradapterteil miteinander verbindet, und wobei die Verbindungshülse im unmontierten Zustand über das Außenrohr beidseitig und mit ihrem dem Anschlussteil zugekehrten Ende über das Rohradapterteil und auf das Anschlussteil einseitig verschiebbar ausgebildet ist.

Dies ermöglicht während der Herstellung eines Leitungssatzes beim Verbinden des Innenrohres mit dem Leitungsverbinder einen freien Zugang an die Verbindungsstelle des Innenrohres und gleichzeitig eine einfache Montage des Leitungsverbinders nach dem Verbinden des Innenrohres.

Vorzugsweise ist zwischen dem Anschlussteil und dem Rohradapterteil im Bereich von sich zugewandten Stirnseiten der jeweiligen Umfangswandungen ein Raum zur Herstellung einer zwischen dem inneren Verbindungselement und dem Innenrohr herzustellenden Schweißverbindung ausgebildet ist, wobei der Raum im unmontierten Zustand durch ein Verschieben der Verbindungshülse über das Rohradapterteil in Richtung des Außenrohres von außen zugänglich ist und im montierten Zustand durch ein Verschieben der Verbindungshülse über das Rohradapterteil auf das Anschlussteil verschlossen ist. Dieser Raum ermöglicht im unmontierten Zustand ein nahes Heranführen eines Werkzeuges zur stoffschlüssigen Verbindung, insbesondere wenn das Außenrohr aus einem starren Material ausgebildet ist und der Rohradapter und das Außenrohr nicht zur Seite geschoben werden können.

Dabei ist es besonders vorteilhaft, wenn sich das innere Verbindungselement vom Anschlussteil über die gesamte axiale Länge des Raumes bis zu der dem Anschlussteil zugewandten Öffnung des Rohradapterteils erstreckt. Dies ermöglicht eine maximale Ausnutzung des Raumes zur Herstellung der stoffschlüssigen Verbindung zwischen dem Verbindungselement und dem Innenrohr.

In einer weiteren Ausführung der Erfindung umfasst das innere Verbindungselement einen hülsenförmigen Verbindungsstutzen zum Einführen des Innenrohres und ist zumindest teilweise lasertransparent ausgebildet. Dies ermöglicht eine besonders einfache und zuverlässige stoffschlüssige Verbindung zwischen Innenrohr und dem inneren Verbindungselement mittels Laserschweißen.

Weitere vorteilhafte Ausgestaltungen der Erfindung sind in den jeweils abhängigen Ansprüchen und in der folgenden Beschreibung enthalten.

Es zeigen:
- Fig. 1a: ein erster Längsschnitt einer Ausführungsform eines erfindungsgemäßen Leitungsverbinders mit einem eingeführten Innenrohr und einem befestigten Außenrohr,
- Fig. 1b: ein zweiter Längsschnitt einer Ausführungsform eines erfindungsgemäßen Leitungsverbinders mit einem eingeführten Innenrohr und einem befestigten Außenrohr,
- Fig. 2a: ein Längsschnitt einer zweiten Ausführungsform eines erfindungsgemäßen Leitungsverbinders mit einem eingeführten Innenrohr und einem befestigten Außenrohr,
- Fig. 2b: eine Seitenansicht der zweiten Ausführungsform eines erfindungsgemäßen Leitungsverbinders gemäß Fig. 2a,
- Fig. 2c: ein Querschnitt gemäß des Schnitts D-D aus Fig. 2b der zweiten Ausführungsform eines erfindungsgemäßen Leitungsverbinders im Bereich der Rastansätze des Anschlussteils,
- Fig. 3: ein Längsschnitt einer Ausführungsform eines erfindungsgemäßen Leitungssatzes aus einer Rohr-in-Rohr Leitung mit zwei erfindungsgemäßen Leitungsverbindern im unmontierten Zustand,
- Fig. 4: ein Längsschnitt einer Ausführungsform eines erfindungsgemäßen Leitungssatzes aus einer Rohr-in-Rohr Leitung mit zwei erfindungsgemäßen Leitungsverbindern im montierten Zustand,
- Fig. 5: ein Diagramm eines SCR-Katalysatoren-Systems mit Rohr-in-Rohr Leitungen mit erfindungsgemäßen Leitungsverbindern in Reihenschaltung,
- Fig. 6: ein Diagramm eines SCR-Katalysatoren-Systems mit Rohr-in-Rohr Leitungen mit erfindungsgemäßen Leitungsverbindern in Parallelschaltung,
- Fig. 7: ein Diagramm eines SCR-Katalysatoren-Systems mit Rohr-in-Rohr Leitungen mit erfindungsgemäßen Leitungsverbindern in Hybridschaltung,
- Fig. 8: ein Diagramm eines alternativen SCR-Katalysatoren-Systems mit Rohr-in-Rohr Leitungen mit erfindungsgemäßen Leitungsverbindern in Reihenschaltung ohne SCR-Tank Rückführung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

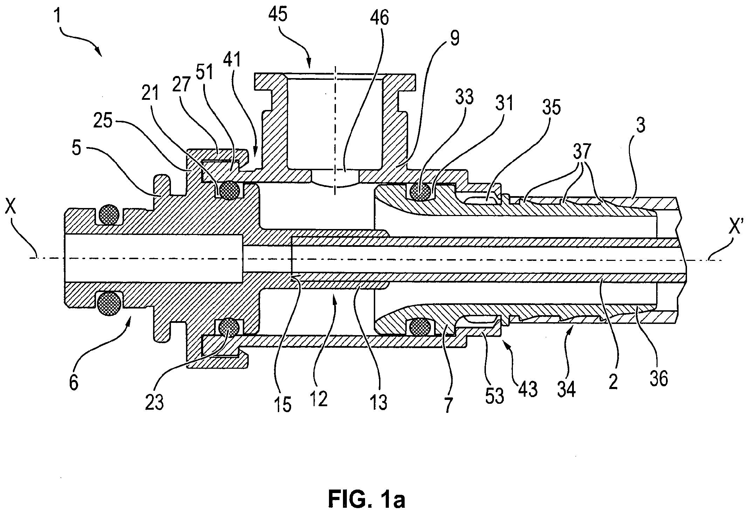

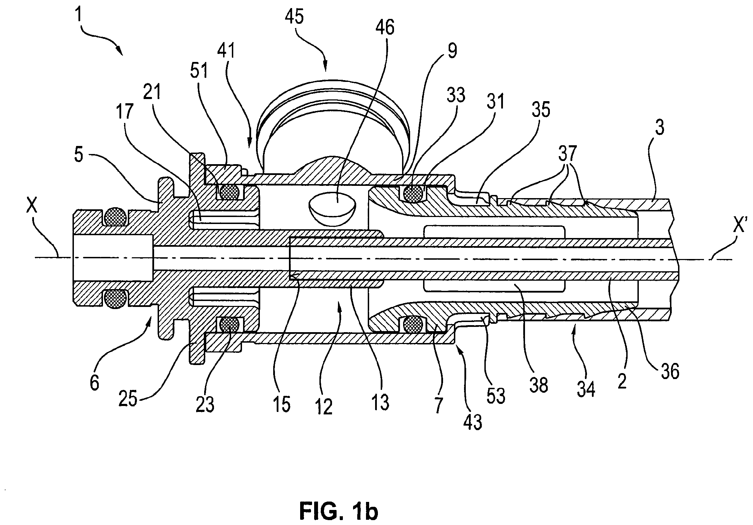

In Fig.1a und in Fig. 1b ist eine erste Ausführungsform eines erfindungsgemäßen Leitungsverbinders 1 in zwei Längsschnitten in unterschiedlicher Drehstellung um die eigene Längsachse X-X' dargestellt.

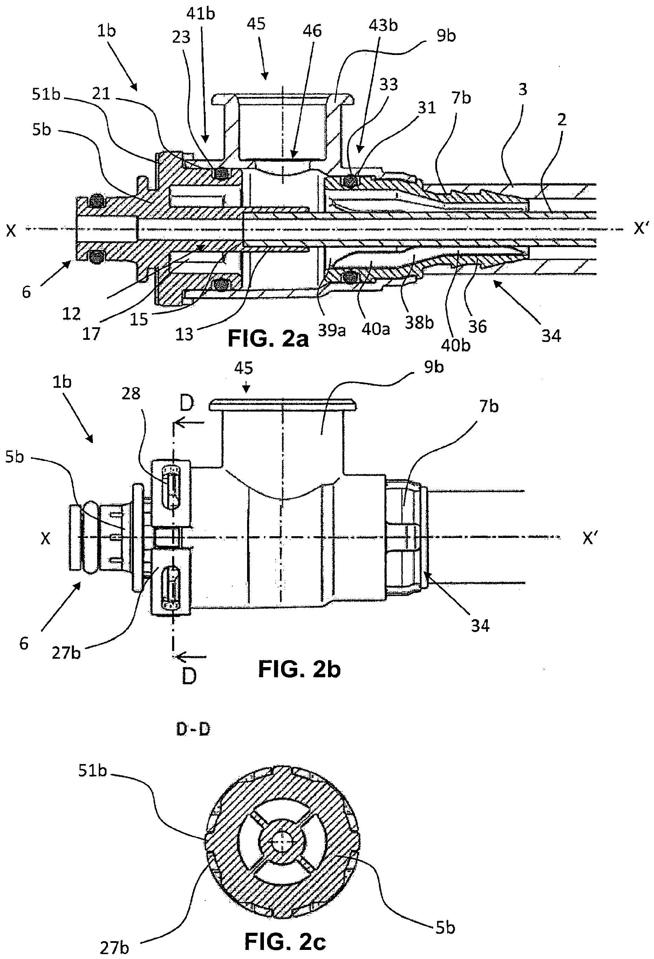

In Fig.2a, 2b und in Fig. 2c ist eine zweite Ausführungsform eines erfindungsgemäßen Leitungsverbinders 1 b dargestellt.

Der erfindungsgemäße Leitungsverbinder 1,1b wird in Verbindung mit Rohr-in-Rohr Leitungen für ein fluidisches, insbesondere gefriergefährdetes Funktionsmedium verwendet, wobei das Funktionsmedium insbesondere über ein Temperiermedium temperiert, insbesondere erwärmt wird, gegebenenfalls aber auch gekühlt werden kann. Dabei dient der Leitungsverbinder 1, 1 b einerseits zur Durchführung des Funktionsmediums insbesondere durch ein Innenrohr 2 der Rohr-in-Rohr Leitung sowie andererseits zur Zu- oder Abführung des - vorzugsweise in einem Kreislauf zirkulierenden - Temperiermediums in einem Außenrohr 3 der Rohr-in-Rohr Leitung.

In einem bevorzugten Einsatz des Leitungsverbinders 1,1b ist das Funktionsmedium eine Harnstoff-Wasser-Lösung in einem SCR-Katalysator-System eines Kraftfahrzeuges, wobei als Temperiermedium beispielsweise das Motor-Kühlmittel (Kühlwasser) verwendet werden kann.

Das Innenrohr 2 und/oder das Außenrohr 3 der Rohr-in-Rohr Leitung sind dabei insbesondere als Hydrolyse-stabilisierte Glattrohre, Wellrohre, formgebogene Rohre oder Mehrschichtrohre oder als Schlauch mit einer Druckträgerschicht ausgebildet, wobei die Materialien insbesondere Ethylen-Propylen-Dien-Kautschuk (EPDM), Polyamide, beispielsweise Polyamid 12 (PA12) oder Polyphthalamide (PPA) umfassen.

Das Innenrohr 2 ist insbesondere mit mindestens einer Sperrschicht aus Polypropylen (PP), Polyethylen (PE) oder Fluorpolymere gegen Ammoniakpermeation ausgebildet. Vorteilhafterweise weist das Innenrohr 2 eine durch Hydrolyse stabilisierte Außenschicht auf, zum Beispiel aus PA12 oder PPA. In einer weiteren Ausgestaltung weißt das Innenrohr 2 eine AdBlue resistente Innenschicht auf, zum Beispiel aus PA12 oder PPA.

Das Außenrohr 3 umfasst insbesondere ebenfalls eine durch Hydrolyse stabilisierte Schicht, zum Beispiel aus PA12, PA66 oder PPA. Das Außenrohr kann auch insbesondere aus EPDM hergestellt sein.

Bei Anwendungen bei denen besonders hohe Temperaturen des Funktionsmediums oder des Temperiermediums erreicht werden, wird insbesondere PPA verwendet.

Der erfindungsgemäße Leitungsverbinder 1, 1 b dient zum Verbinden der Rohr-in-Rohr Leitung mit entsprechenden passenden Gegenstücken von einer Leitung für das Funktionsmedium sowie vorzugsweise für eine Leitung für das Temperiermedium und umfasst ein separates Anschlussteil 5, 5b, ein separates Rohradapterteil 7, 7b und eine separate Verbindungshülse 9, 9b, die im montierten Zustand über die Verbindungshülse 9, 9b miteinander verbunden sind.

Das Anschlussteil 5, 5b dient insbesondere zum Verbinden des Innenrohres 2 mit einem Anschluss einer Leitung für das Funktionsmedium und weist an der der Leitung für das Funktionsmedium zugewandten Seite ein einstückig ausgebildetes erstes Anschlusselement 6 mit passenden Verbindungs- und Dichtmitteln auf. Das erste Anschlusselement 6 kann sowohl parallel zur Leitungsverbinder-Achse X-X' als auch abgewinkelt zur Leitungsverbinder-Achse X-X' ausgebildet sein, so dass ein Art Winkelstecker gebildet wird.

Das Anschlussteil 5, 5b ist hohlzylinderförmig ausgebildet und umfasst an seiner dem Innenrohr 2 zugewandten Seite ein Verbindungselement 12 zum Befestigen des Innenrohres 2. Das Verbindungselement 12 umfasst vorteilhafterweise einen insbesondere hülsenförmigen Verbindungsstutzen 13, dessen Innendurchmesser an den Außendurchmesser des Innenrohres 2 angepasst ist, so dass das Innenrohr 2 in den Verbindungsstutzen 13 eingesteckt werden kann. Der Verbindungsstutzen 13 ist im Inneren in Richtung des Gegenstücks durch eine Ringwand 15 begrenzt, so dass die Ringwand 15 in axialer Richtung einen Anschlag für das eingesteckte Innenrohr 2 bildet. Das Verbindungselement 12 ist insbesondere einteilig am Anschlussteil 5, 5b angeformt. Die axiale Länge des Verbindungselements 12 ist derart ausgebildet, dass das Innenrohr 2 insbesondere durch Schweißen, vorzugsweise durch Laserschweißen, mit dem Verbindungselement 12 verbunden werden kann. Dazu ist das Verbindungselement 12 insbesondere zumindest teilweise aus einem lasertransparenten Material ausgebildet.

Wie in Fig. 1b und Fig. 2a dargestellt, sind in einer vorteilhaften Ausführungsform des Anschlussteils 5, 5b zwischen der Umfangswandung des Verbindungselementes 12 und der Umfangswandung des Anschlussteils 5, 5b mehrere axial verlaufende und sich radial vom Außenumfang des Verbindungselementes 12 zum Innenumfang des Anschlussteils 5 erstreckende Rippen 17 angeordnet. In den Zwischenräumen zwischen den Rippen kann das zwischen dem Außenrohr 3 und dem Innenrohr 2 fließende Temperiermedium fließen, so dass die Wärmeübertragungseigenschaften des Anschlussteils 5, 5b verbessert werden und das Funktionsmedium in dem Bereich des Verbindungselementes 12 und des Anschlussteils 5, 5b zusätzlich temperiert werden kann.

Zudem umfasst das Anschlussteil 5, 5b an seinem Außenumfang Verbindungsmittel und Dichtmittel zum dichtenden Verbinden mit der Verbindungshülse 9, 9b. Die Dichtmittel des Anschlussteils 5, 5b umfassen insbesondere eine am Außenumfang des Anschlussteils 5, 5b umlaufende Ringnut 21, in der eine Dichtung 23 eingesetzt ist.

Die Verbindungsmittel des Anschlussteils 5, 5b umfassen mehrere über den Außenumfang des Anschlussteils 5, 5b verteilte Rastmittel. Alternativ zu den Rastmitteln können die Verbindungsmittel auch aus einer stoffschlüssigen Verbindung bestehen.

Die Verbindungsmittel sind in der ersten Ausführungsform gemäß Fig. 1a, 1b insbesondere als mehrere an einem umlaufenden radialen Steg 25 am Außenumfang des Anschlussteils 5 angebrachte, parallel zur Leitungsverbinder-Achse X-X' in Richtung des Verbindungshülsenteils 9 verlaufende Rastarme 27 ausgebildet. Dabei ist die Länge der Rastarme 27 insbesondere derart, dass sie die Ringnut 21 in radialer Richtung abdecken.

Das dem Anschlussteil 5 zugewandte Ende der Verbindungshülse 9 weist zu den Verbindungsmitteln des Anschlussteils 5 passende Verbindungsmittel auf, so dass das Anschlussteil 5 und die Verbindungshülse 9 dichtend miteinander verbindbar ausgebildet sind.

Die Verbindungsmittel der Verbindungshülse 9 umfassen insbesondere mehrere am Außenumfang des dem Anschlussteil 5 zugewandten Ende der Verbindungshülse 9 verteilte Rastansätze 51, wobei die Rastansätze 51 derart angeordnet und ausgebildet sind, dass die Rastarme 27 des Anschlussteils 5 im montierten Zustand der Verbindungshülse 9 hinter den Rastansätzen 51 einrasten, wobei die Umfangswandung der Verbindungshülse 9 dichtend mit der Dichtung 23 des Anschlussteils 5 zusammenwirkt.

Die Verbindungsmittel sind in der zweiten Ausführungsform gemäß Fig. 2a, Fig. 2b und Fig. 2c insbesondere als mehrere parallel zur Leitungsverbinder-Achse X-X' in Richtung des Anschlussteils 5b verlaufende Rastlaschen 27b am Außenumfang der Verbindungshülse 9b ausgebildet. Die Rastlaschen 27b weisen eine Rastöffnung 28 auf, die mit an dem Außenumfang des Anschlussteils 5b angeordneten Rastansätzen 51 b rastend zusammenwirken.

Gemäß Fig. 2b und Fig. 2c sind die Rastmittel des Anschlussteils 5b beziehungsweise der Verbindungshülse 9b insbesondere derart ausgebildet, dass sie eine Verdrehsicherung aufweisen. Die Verdrehsicherung wird durch die Rastansätze 51 b gebildet, die in die Rastöffnungen 28 der Rastlaschen 27b im verrasteten Zustand eingreifen. Die Verdrehsicherung verhindert ein Verdrehen des Anschlussteils 5b zur Verbindungshülse 9b im verrasteten Zustand. Insbesondere sind die Rastmittel derart ausgebildet, dass sie sich in verschiedenen Drehstellungen zueinander, insbesondere in vier um 90° versetzte Drehstellungen, verrasten lassen.

Das Rohradapterteil 7, 7b ist ebenfalls hohlzylinderförmig ausgebildet und weist am Außenumfang an seiner dem Anschlussteil 5, 5b zugewandten Seite Dichtmittel und Verbindungsmittel für eine dichtende Verbindung mit der Verbindungshülse 9, 9b auf. Die Dichtmittel umfassen insbesondere eine Dichtungsnut 31 und eine darin eingesetzte Dichtung 33. Dabei ist der Außenumfang des Rohradapterteils 7, 7b derart an den Innenumfang des dem Rohradapterteil 7, 7b zugewandten Ende der Verbindungshülse 9, 9b angepasst, dass die Innenwand der Verbindungshülse 9, 9b mit der Dichtung 33 dichtend zusammenwirkt.

Die Verbindungsmittel des Rohradapterteils 7, 7b umfassen insbesondere eine am Außenumfang angeordnete umlaufende Rastnut 35 zur Verrastung mit Verbindungsmittel der Verbindungshülse 9, 9b. Die Verbindungsmittel an der Verbindungshülse 9, 9b und dem Rohradapterteil 7, 7b sind derart ausgebildet, dass die Verbindungshülse 9, 9b auf dem Rohradapterteil 7, 7b verdrehbar gelagert ist. Alternativ zu der Verrastung können die Verbindungsmittel auch aus einer stoffschlüssigen Verbindung bestehen.

Zudem umfasst das Rohradapterteil 7, 7b ein äußeres Verbindungselement 34 zur Verbindung des Außenrohres 3 mit dem Rohradapterteil 7, 7b. Dazu ist die dem Anschlussteil 5, 5b abgewandte Seite des Rohradapterteils 7, 7b als Einsteckstutzen 36 ausgebildet, wobei der Einsteckstutzen 36 insbesondere ein gezahntes Dornprofil 37 aufweist. Das Außenrohr 3 wird zur Verbindung mit dem Rohradapterteil 7, 7b auf den Einsteckstutzen 36 aufgeschoben, wobei das Außenrohr 3 insbesondere durch das gezahnte Dornprofil 37 fixiert wird. Alternativ zum Einsteckstutzen 36 kann das äußere Verbindungselement 34 des Rohradapterteils 7, 7b auch einen hülsenförmigen Verbindungsstutzen aufweisen, dessen Innenumfang an den Außenumfang des Außenrohres 3 angepasst ist, wobei das Außenrohr 3 zur Befestigung in den Verbindungsstutzen eingeschoben wird. Dabei ist die Umfangswandung des Verbindungsstutzens insbesondere zumindest teilweise lasertransparent ausgebildet, so dass das Außenrohr 3 ebenfalls stoffschlüssig durch Laserschweißen mit dem Rohradapter 7, 7b verbunden werden kann.

Die dem Anschlussteil 5, 5b zugewandte Öffnung des Rohradapterteils 7, 7b ist am Innenumfang insbesondere trichterförmig von außen nach innen verjüngend ausgebildet.

Bei der zweiten Ausführungsform gemäß Fig. 2a weist die dem Anschlussteil 5, 5b zugewandte Öffnung des Rohradapterteils 7, 7b einen am Innenumfang gegenüber dem Innenumfang des Einsteckstutzens 36 erweiterten Bereich 39a auf. Der erweiterte Bereich 39a erstreckt sich insbesondere über eine axiale Länge die der axialen Länge des Verbindungsstutzens 13 des Anschlussteils 5b entspricht.

Wie in Fig. 1b und Fig. 2a dargestellt, weist das Rohradapterteil 7, 7b vorteilhafterweise im Inneren an der Umfangswandung mehrere axial verlaufende und sich radial nach innen erstreckende Stützrippen 38, 38b auf, die am Innenumfang des Rohradapterteils 7, 7b umfangsgemäß verteilt angeordnet sind. In der ersten Ausführungsform gemäß Fig. 1b haben die Stützrippen 38 eine an den Außendurchmesser des Innenrohres 2 angepasste radiale Höhe, so dass sie ein eingeführtes Innenrohr 2 mittig in dem Rohradapterteil 7 führen.

Bei der zweiten Ausführungsform gemäß Fig. 2a weisen die Stützrippen 38b zwei Stützbereiche 40a, 40b mit unterschiedlichen radialen Höhen auf. Dabei ist der dem Anschlussteil 5b zugewandte erste Stützbereich 40a im erweiterten Bereich 39a des Rohradapterteils 7b angeordnet. Die radiale Höhe der Stützrippen 38b des ersten Stützbereichs 40a ist insbesondere an den Außenumfang des Verbindungsstutzens 13 des Anschlussteils 5b angepasst, so dass die Außenwand des Verbindungsstutzens 13 in dem ersten Stützbereich 40a mittig geführt werden kann. Die radiale Höhe des zweiten dem Anschlussteil 5b abgewandten Stützbereichs 40b ist an den Außendurchmesser des Innenrohres 2 angepasst, so dass die Stützrippen 38b in dem zweiten Stützbereich 40b ein eingeführtes Innenrohr 2 mittig in dem Rohradapterteil 7b führen.

Die Verbindungshülse 9, 9b ist hohlzylinderförmig ausgebildet und weist an der dem Anschlussteil 5, 5b zugewandten Ende eine Öffnung 41, 41 b zum Aufschieben auf das Anschlussteil 5, 5b und an dem anderen Ende eine Öffnung 43, 43b zum Aufschieben auf das Rohradapterteil 7, 7b auf. Zwischen den beiden Öffnungen 41, 41 b, 43, 43b an den Enden ist ein zweites Anschlusselement 45 angeordnet, das über eine Öffnung 46 in der Umfangswandung der Verbindungshülse 9, 9b mit einer Durchgangsöffnung der Verbindungshülse 9, 9b, die die beiden Öffnungen 41, 41b, 43, 43b an den Enden miteinander verbindet, fluidisch verbunden ist. Das zweite Anschlusselement 45 dient zum Verbinden des Außenrohres 3 mit einem Anschluss einer Leitung für das Temperiermedium und weist an der der Leitung des Temperiermediums zugewandten Seite passende Verbindungs- und Dichtmittel auf.

Der Innendurchmesser der dem Anschlussteil 5, 5b zugewandten Öffnung 41, 41b ist an den Außendurchmesser des Anschlussteils 5, 5b im Bereich der Ringnut 21 angepasst, so dass die Innenwand der Verbindungshülse 9, 9b mit der Dichtung 23 dichtend zusammenwirkt.

Bei der zweiten Ausführungsform gemäß Fig. 2a ist der Außendurchmesser des Anschlussteils 5b im Bereich der Ringnut 21 und der Innendurchmesser der dem Anschlussteil 5b zugewandten Öffnung 41 b der Verbindungshülse 9b insbesondere größer als der Außendurchmesser des Rohradapterteils 7b im Bereich der Dichtungsnut 31 und größer als der Innendurchmesser der dem Rohradapterteil 7b zugewandten Öffnung 43b der Verbindungshülse 9b. Dabei mündet die Öffnung 46 der Verbindungshülse 9b in dem Bereich der Öffnung 41b mit dem größeren Innendurchmesser. Dies verhindert eine Beschädigung der Dichtung 33 des Rohradapterteils 7b durch die Kanten der Mündung der Öffnung 46 der Verbindungshülse 9b beim Aufschieben der Verbindungshülse 9b über das Rohradapterteil 7b.

Das dem Rohradapterteil 7, 7b zugewandte Ende der Verbindungshülse 9, 9b weist zu den Verbindungsmitteln des Rohradapterteils 7, 7b passende Verbindungsmittel auf, so dass das Rohradapterteil 7, 7b und die Verbindungshülse 9, 9b dichtend miteinander verbindbar ausgebildet sind. Der Innendurchmesser der dem Rohradpaterteil 7, 7b zugewandten Öffnung 43, 43b ist an den Außendurchmesser des Rohradapterteils 7, 7b im Bereich der Dichtungsnut 31 angepasst. Insbesondere umfassen die Verbindungsmittel mehrere am Umfang der dem Rohradapter zugewandten Stirnseite der Verbindungshülse 9, 9b verteilte Rastlaschen 53, wobei die Rastlaschen 53 derart angeordnet und ausgebildet sind, dass die Rastlaschen 53 im montierten Zustand der Verbindungshülse 9, 9b in die Rastnut 35 des Rohradapterteils 7, 7b einrasten, wobei die Umfangswandung der Verbindungshülse 9, 9b dichtend mit der Dichtung 33 des Rohradapterteils 7, 7b zusammenwirkt. Alternativ zu den Rastmitteln können die Verbindungsmittel auch aus einer stoffschlüssigen Verbindung bestehen.

Die Verbindungshülse 9, 9b ist somit im unmontierten Zustand über das Außenrohr 3 beidseitig und mit ihrem dem Anschlussteil 5, 5b zugekehrten Ende über das Rohradapterteil 7, 7b und auf das Anschlussteil 5, 5b einseitig verschiebbar ausgebildet.

Die axiale Länge der Verbindungshülse 9, 9b und die axiale Länge des Verbindungselementes 12 des Anschlussteils 5, 5b sind derart ausgebildet und aneinander angepasst, dass der Abstand zwischen den zugekehrten Stirnwänden der Umfangswandung des Anschlussteils 5, 5b und der Umfangswandung des Rohradapterteils 7, 7b ausreichend ist, um eine Verbindung durch Schweißen, insbesondere durch Laserschweißen, zwischen dem Innenrohr 2 und dem Verbindungsstutzen 13 herzustellen. Insbesondere ist der Abstand ausreichend, um zwischen dem Anschlussteil 5, 5b und dem Rohradapterteil 7, 7b ein Schweißwerkzeug und ein Haltewerkzeug für das Innenrohr 2 einzuführen und an die Verbindungsstellen heranzuführen.

Das Anschlussteil 5, 5b, das Rohradapterteil 7, 7b und die Verbindungshülse 9, 9b sind derart ausgebildet und angeordnet, dass zwischen dem Anschlussteil 5, 5b und dem Rohradapterteil 7, 7b durch den Abstand ein Raum zur Herstellung einer zwischen dem inneren Verbindungselement 12 und dem Innenrohr 2 herzustellenden Schweißverbindung ausgebildet ist. Der Raum ist im unmontierten Zustand durch ein Verschieben der Verbindungshülse 9, 9b über das Rohradapterteil 7, 7b in Richtung des Außenrohres 3 von außen zugänglich und im montierten Zustand durch ein Verschieben der Verbindungshülse 9, 9b über das Rohradapterteil 7, 7b auf das Anschlussteil 5, 5b verschlossen.

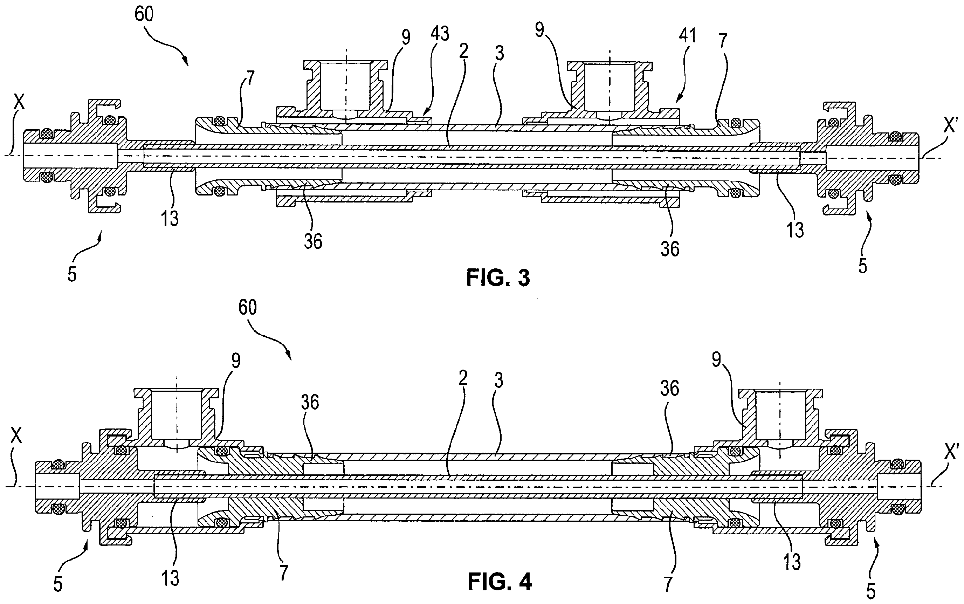

Fig. 3 und Fig. 4 zeigen einen vorkonfektionierten Leitungssatz 60, umfassend eine Rohr-in-Rohr Leitung mit zum Beispiel zwei erfindungsgemäßen Leitungsverbindern 1 der ersten Ausführungsform gemäß Fig.1 und Fig. 2. Die folgenden Ausführungen zur Herstellung eines Leitungssatzes 60 gelten grundsätzlich auch für Leitungssätze 60 mit Leitungsverbindern 1 b der zweiten Ausführungsform gemäß Fig. 2a, Fig. 2b und Fig. 2c. Der Leitungssatz 60 wird durch folgende Verfahrensschritte hergestellt:
Zunächst wird das Außenrohr 3 auf die gewünschte vorkonfektionierte Länge geschnitten. Danach wird an der ersten Seite des Außenrohres 3 ein Rohradapterteil 7, 7b des ersten Leitungsverbinders 1, 1b montiert, insbesondere indem es mit seinem Einsteckstutzen 36 in das Außenrohr 3 gesteckt wird. Danach werden zwei Verbindungshülsen 9, 9b der beiden Leitungsverbinder 1, 1b auf das Außenrohr 3 von der zweiten Seite des Außenrohrs 3 aufgeschoben, wobei die Verbindungshülse 9, 9b des ersten Leitungsverbinders 11, 1b mit der dem Anschlussteil 5, 5b zugewandten Öffnung 41, 41 b voran und die Verbindungshülse 9, 9b des zweiten Leitungsverbinders 1, 1 b mit der dem Rohradapterteil 7, 7b zugewandten Öffnung 43, 43b voran auf das Außenrohr 3 aufgeschoben wird. Danach wird das Rohradapterteil 7, 7b des zweiten Leitungsverbinders 1, 1 b an der zweiten Seite des Außenrohres 3 montiert; insbesondere indem es mit seinem Einsteckstutzen 36 in das Außenrohr 3 gesteckt wird. Danach wird das Innenrohr 2 durch die beiden Rohradapterteile 7, 7b in das Außenrohr 3 gezogen.

Als nächstes wird das Anschlussteil 5, 5b des ersten Leitungsverbinders 1, 1b mit dem ersten Ende des Innenrohres 2 stoffschlüssig insbesondere durch Schweißen, vorzugsweise durch Laserschweißen verbunden. Dazu wird das erste Ende des Innenrohres 2 in den Verbindungsstutzen 13 des Anschlussteils 5, 5b eingeführt. Da das zweite Ende des Innenrohres 2 noch frei ist, kann das Außenrohr 3 mit den verbundenen Rohradapterteilen 7, 7b und den frei beweglichen aufgeschobenen Verbindungshülsen 9, 9b noch beliebig weit über das Innenrohr 2 zurückgeschoben werden, so dass ausreichend Platz für ein Heranführen des Schweißwerkzeuges und des Haltewerkzeuges für das Innenrohr 2 an den Verbindungsstutzen 13 des Anschlussteils 5, 5b des ersten Leitungsverbinders 1, 1b vorhanden ist.

Nachdem die stoffschlüssige Verbindung des ersten Endes des Innenrohres 2 mit dem Anschlussteil 5, 5b des ersten Leitungsverbinders 1, 1 b hergestellt ist, kann das Außenrohr 3 mit dem Rohradapterteil 7, 7b des ersten Leitungsverbinders 1, 1b auf Anschlag gegen das Anschlussteil 5, 5b des ersten Leitungsverbinders 1, 1b geschoben werden. Danach wird das Innenrohr 2 an dem noch nicht verbundenen Ende auf die gewünschte vorkonfektionierte Länge geschnitten, wobei die Länge des Innenrohres 2 der Länge des Außenrohres 3 plus die Länge der Teile des Innenrohres 2, die in die jeweiligen Verbindungsstutzen 13 der Anschlussteile 5, 5b eingeschoben werden, entspricht.

Als nächstes wird das Anschlussteil 5, 5b des zweiten Leitungsverbinders 1, 1b mit dem zweiten Ende des Innenrohres 2 stoffschlüssig insbesondere durch Schweißen, vorzugsweise Laserschweißen, verbunden. Dazu wird das zweite Ende des Innenrohres 2 in den Verbindungsstutzen 13 des Anschlussteils 5, 5b des zweiten Leitungsverbinders 1 eingeführt. Da das Rohradapterteil 7, 7b und das Anschlussteil 5, 5b des ersten Leitungsverbinders 1, 1b auf Anschlag gegeneinander geschoben wurden, ist der Abstand des Anschlussteils 5, 5b des zweiten Leitungsverbinders 1, 1 b zum Rohradapterteil 7, 7b des zweiten Leitungsverbinders 1, 1 b die zweifache Länge des Abstands zwischen dem Anschlussteil 5, 5b und dem Rohradapterteil 7, 7b im montierten Zustand, so dass ausreichend Platz für ein Heranführen eines Schweißwerkzeuges, insbesondere eines Laserschweißwerkzeuges, und eines Haltewerkzeuges für das Innenrohr 2 vorhanden ist.

Nachdem beide Anschlussteile 5, 5b mit den Enden des Innenrohres 2 verbunden sind, wird das Außenrohr 3 mit den Rohradapterteilen 7, 7b mittig über dem Innenrohr 2 ausgerichtet und die Verbindungshülsen 9, 9b der Leitungsverbinder 1, 1 b über die jeweiligen Rohradapterteile 7, 7b und Verbindungsstutzen 13 der Anschlussteile 5, 5b geschoben und mit den Anschlussteilen 5, 5b und den Rohradapterteilen 7, 7b insbesondere durch die Rastmittel verbunden.

Wenn die einfache Länge des Abstands zwischen dem Anschlussteil 5, 5b und dem Rohradapterteil 7, 7b im montierten Zustand für das Heranführen eines Schweißwerkzeuges ausreicht, kann eine vorkonfektionierter Leitungssatz 60 auch mit einem herkömmlichen Leitungsverbinder an einem Ende und einem erfindungsgemäßen Leitungsverbinder 1, 1b an dem anderen Ende hergestellt werden.

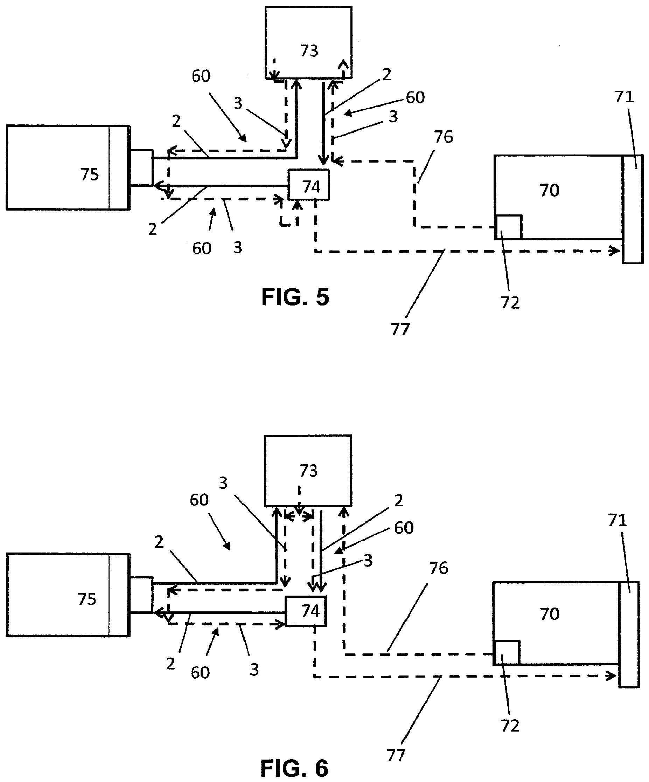

In den Fig. 5 bis Fig. 8 sind vier Anwendungsbeispiele für die erfindungsgemäßen Leitungsverbinder 1, 1b und Leitungssätze 60 in einem SCR-Katalysator-System dargestellt. Diese sind besonders geeignete Beispiele, wobei jedoch auch andere Systeme und nicht dargestellte Verbindungsmöglichkeiten und Schaltungen mittels erfindungsgemäßer Leitungsverbinder 1, 1 b und Leitungssätze 60 denkbar sind.

In Fig. 5 ist ein Diagramm eines SCR-Katalysatoren-Systems mit erfindungsgemäßen Rohr-in-Rohr Leitungssätzen 60 mit erfindungsgemäßen Leitungsverbindern 1, 1 b in Reihenschaltung dargestellt. Das SCR-Katalysator-System umfasst mehrere mit Leitungssätzen 60 verbundene Komponenten, insbesondere einen Motor 70, umfassend einen Kühler 71 und ein Wasser-Absperrventil 72, ein SCR-Tank 73, eine Dosierpumpe 74 und einen Katalysator 75. Bei diesem SCR-Katalysatoren-System wird das SCR-Fluid mittels erfindungsgemäßen Leitungssätzen 60 von dem SCR-Tank 73 mittels der Dosierpumpe 74 zu dem Katalysator 75 und vom Katalysator 75 wieder zurück in den SCR-Tank 73 gepumpt. Dabei fließt das SCR-Fluid durch die Anschlussteile 5, 5b und das Innenrohr 2 der Leitungsverbinder 1, 1b der Leitungssätze 60. Dabei fließt das SCR-Fluid zunächst von dem SCR-Tank 73 durch die Anschlussteile 5, 5b des einen Leitungsverbinders 1, 1b, das Innenrohr 2 und das Anschlussteil 5, 5b des anderen Leitungsverbinder 1, 1b des ersten Leitungssatzes 60 zu der Dosierpumpe 74. Danach fließt das SCR-Fluid von der Dosierpumpe 74 durch die Anschlussteile 5, 5b des einen Leitungsverbinders 1, 1 b, das Innenrohr 2 und das Anschlussteil 5, 5b des anderen Leitungsverbinder 1, 1 b des zweiten Leitungssatzes 60 zu dem Katalysator 75. Anschließend fließt es von dem Katalysator 75 durch die Anschlussteile 5, 5b des einen Leitungsverbinders 1, 1b, das Innenrohr 2 und das Anschlussteil 5, 5b des anderen Leitungsverbinder 1, 1b des dritten Leitungssatzes 60 zurück zum SCR-Tank 73.

Gleichzeitig wird das Kühlwasser des Motors 70 über das Wasser-Absperrventil 72 mittels einer Vorlaufleitung 76 zu der Dosierpumpe 74 geführt und dort mit dem einen Anschlusselement 45 des einen Leitungsverbinders 1, 1b verbunden und über das Außenrohr 3 zu dem anderen Leitungsverbinder 1, 1 b des ersten Leitungssatzes 60 geführt und über das andere Anschlusselement 45 zum SCR-Tank geleitet.

Insbesondere wird das Kühlwasser zum Temperieren des SCR-Tanks verwendet und anschließend durch ein Anschlusselement 45 eines Leitungsverbinders 1, 1 b des zweiten Leitungssatzes 60 über das Außenrohr 3 und das andere Anschlusselement 45 des anderen Leitungsverbinders 1, 1 b des zweiten Leitungssatzes 60 zum Katalysator 75 geleitet. Der Katalysator 75 benötigt in dem dargestellten Ausführungsbeispiel keine direkte Temperierung, so dass das Anschlusselement 45 des zweiten Leitungssatzes 60 direkt mit einem Anschlusselement 45 des Leitungsverbinders 1, 1b des dritten Leitungssatzes 60 verbunden ist. Das Kühlwasser fließt dann durch das Außenrohr 3 und das andere Anschlusselement 45 des anderen Leitungsverbinders 1, 1 b des dritten Leitungssatzes 60 zu der Dosierpumpe 45.

Vorzugsweise wird das Kühlwasser danach zum Temperieren der Dosierpumpe 74 verwendet und anschließend über eine Rücklaufleitung 77 zum Kühler 71 geleitet. Von dem Kühler 71 fließt das Kühlwasser zurück in den Motor 70. In den Leitungssätzen 60 verlaufen das SCR-Fluid und das Kühlwasser gegenläufig im Innenrohr 2 bzw. im Außenrohr 3. Es wäre jedoch genauso denkbar das Kühlwasser umgekehrt und gleichläufig zum SCR-Fluid durch die Leitungssätze 60 fließen zu lassen.

Durch die Reihenschaltung wird der gesamte Volumenstrom des SCR-Fluids bzw. des Kühlwassers durch das Innenrohr 2 bzw. das Außenrohr 3 befördert. Die Reihenschaltung hat den Vorteil, dass besonders wenige Zuleiter und Verteiler benötigt werden.

In Fig. 6 ist ein Diagramm eines SCR-Katalysatoren-Systems mit erfindungsgemäßen Rohr-in-Rohr Leitungssätzen 60 mit erfindungsgemäßen Leitungsverbindern 1, 1b in Parallelschaltung dargestellt. Bei dem SCR-Katalysatoren-System mit der Parallelschaltung wird das SCR-Fluid mittels erfindungsgemäßen Leitungssätzen 60 von dem SCR-Tank 73 mittels der Dosierpumpe 74 zu dem Katalysator 75 und vom Katalysator 75 wieder zurück in den SCR-Tank 73 gepumpt, wie bereits für die Reihenschaltung beschrieben.

Gleichzeitig wird das Kühlwasser des Motors 70 über das Wasser-Absperrventil 72 mittels einer Vorlaufleitung 76 zu dem SCR-Tank 73 geführt und zum Temperieren des SCR-Tanks verwendet und danach sowohl in den ersten als auch in den dritten Leitungssatz 60 parallel verteilt. Somit fließt das Kühlwasser von dem SCR-Tank in ein Anschlusselement 45 des einen Leitungsverbinders 1, 1 b und über das Außenrohr 3 zu dem anderen Leitungsverbinder 1, 1b des ersten Leitungssatzes 60 zur Dosierpumpe 74.

Zudem wird das Kühlwasser durch ein Anschlusselement 45 eines Leitungsverbinders 1, 1 b des dritten Leitungssatzes 60 über das Außenrohr 3 und das andere Anschlusselement 45 des anderen Leitungsverbinders 1, 1b des dritten Leitungssatzes 60 zum Katalysator 75 geleitet. In dem dargestellten Ausführungsbeispiel benötigt der Katalysator 75 keine direkte Temperierung, so dass das Anschlusselement 45 des dritten Leitungssatzes 60 direkt mit einem Anschlusselement 45 des Leitungsverbinders 1, 1 b des zweiten Leitungssatzes 60 verbunden ist. Das Kühlwasser fließt dann durch das Außenrohr 3 und das andere Anschlusselement 45 des anderen Leitungsverbinders 1, 1b des zweiten Leitungssatzes 60 zu der Dosierpumpe 45.

Insbesondere wird danach das Kühlwasser zum Temperieren der Dosierpumpe 74 verwendet und mit dem Kühlwasser, das direkt von dem SCR-Tank 73 kommt, zusammengeführt und anschließend über die Rücklaufleitung 77 zum Kühler 71 geleitet. Von dem Kühler 71 fließt das Kühlwasser zurück in den Motor 70. In dem ersten Leitungssatz 60 verlaufen das SCR-Fluid und das Kühlwasser gleichläufig im Innenrohr 2 bzw. im Außenrohr 3. In dem zweiten und dritten Leitungssatz 60 verlaufen das SCR-Fluid und das Kühlwasser gegenläufig im Innenrohr 2 bzw. im Außenrohr 3.

Durch die Parallelschaltung wird der Volumenstrom des Kühlwassers in verschiedene Leitungssätze 60 aufgeteilt. Außerdem werden Druckverluste verringert. Dies ermöglicht die Verwendung von kleineren bzw. kompakteren Leitungssätzen 60, so dass unterschiedliche Volumenströme bzw. Kreisläufe für das Funktionsmedium und das Temperiermedium entstehen.

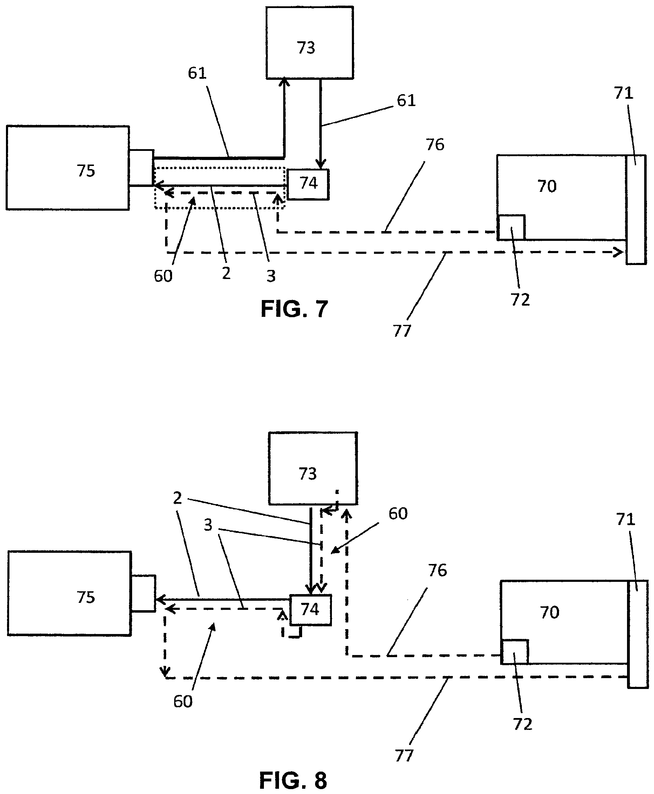

In Fig. 7 ist ein Diagramm eines SCR-Katalysatoren-Systems mit einem erfindungsgemäßen Rohr-In-Rohr Leitungssatz 60 mit erfindungsgemäßen Leitungsverbindern 1, 1b und mit bekannten elektrisch beheizten Leitungssätzen 61 dargestellt. Bei dem SCR-Katalysatoren-System mit der Hybridschaltung wird das SCR-Fluid zunächst mit bekannten elektrisch beheizten Leitungssätzen 61 von dem SCR-Tank 73 zu der Dosierpumpe 74 geführt. Danach fließt das SCR-Fluid von der Dosierpumpe 74 durch die Anschlussteile 5, 5b des einen Leitungsverbinders 1, 1b, das Innenrohr 2 und das Anschlussteil 5, 5b des anderen Leitungsverbinder 1, 1 b des erfindungsgemäßen Leitungssatzes 60 zu dem Katalysator 75. Anschließend fließt das SCR-Fluid von dem Katalysator 75 durch einen zweiten bekannten elektrisch beheizten Leitungssatz 61 zurück zum SCR-Tank 73.

Gleichzeitig wird das Kühlwasser des Motors 70 über das Wasser-Absperrventil 72 mittels einer Vorlaufleitung 76 in den erfindungsgemäßen Leitungssatz 60 geleitet.

Somit fließt das Kühlwasser von der Vorlaufleitung 76 in ein Anschlusselement 45 des einen Leitungsverbinders 1, 1 b und über das Außenrohr 3 zu dem anderen Leitungsverbinder 1, 1b des erfindungsgemäßen Leitungssatzes 60 und von dort in die Rücklaufleitung 77. Genauso wäre denkbar einen der andere bekannten Leitungssätze 61 durch einen erfindungsgemäßen Leitungssatz 60 auszutauschen und zusätzlich mit Kühlwasser zu temperieren.

Dies ermöglicht grundsätzlich die Verwendung von erfindungsgemäßen Leitungssätzen 60 in Kombination mit herkömmlichen elektrischen Leitungssätzen 61. Zudem ermöglicht dies eine gezielte Kühlung eines Leitungssatzes 60 in einem besonderen Heißbereich des SCR-Katalysator-Systems unabhängig von einer benötigten Heizleistung in anderen Bereichen.

In Fig. 8 ist ein Diagramm eines weiteren SCR-Katalysatoren-Systems mit erfindungsgemäßen Rohr-in-Rohr Leitungssätzen 60 mit erfindungsgemäßen Leitungsverbindern 1, 1b in Reihenschaltung dargestellt. Bei diesem SCR-Katalysatoren-System wird das SCR-Fluid mittels erfindungsgemäßen Leitungssätzen 60 von dem SCR-Tank 73 mittels der Dosierpumpe 74 zu dem Katalysator 75 gepumpt, wobei kein Rückfluss zu dem SCR-Tank erforderlich ist, da die Dosierpumpe 74 mittels einer Sensorsteuerung die Menge des SCR-Fluids so genau regelt, das kein SCR-Fluid nach der Verwendung in dem Katalysator 75 übrig bleibt.

Das SCR-Fluid fließt zunächst von dem SCR-Tank 73 durch die Anschlussteile 5, 5b des einen Leitungsverbinders 1, 1b, das Innenrohr 2 und das Anschlussteil 5, 5b des anderen Leitungsverbinder 1, 1 b des ersten Leitungssatzes 60 zu der Dosierpumpe 74. Danach fließt das SCR-Fluid von der Dosierpumpe 74 durch die Anschlussteile 5, 5b des einen Leitungsverbinders 1, 1 b, das Innenrohr 2 und das Anschlussteil 5, 5b des anderen Leitungsverbinder 1, 1b des zweiten Leitungssatzes 60 zu dem Katalysator 75.

Gleichzeitig wird das Kühlwasser des Motors 70 über das Wasser-Absperrventil 72 mittels einer Vorlaufleitung 76 zu dem SCR-Tank 73 geführt und dort zum Temperieren des SCR-Tanks verwendet und wird anschließend durch ein Anschlusselement 45 eines Leitungsverbinders 1, 1 b des zweiten Leitungssatzes 60 über das Außenrohr 3 und das andere Anschlusselement 45 des anderen Leitungsverbinders 1, 1 b des zweiten Leitungssatzes 60 zur Dosierpumpe 74 geleitet und dort zur Temperierung der Dosierpumpe 74 verwendet. Danach wird das Kühlwasser von der Dosierpumpe 74 in ein Anschlusselement 45 eines Leitungsverbinders 1, 1 b des zweiten Leitungssatzes 60 über das Außenrohr 3 und das andere Anschlusselement 45 des anderen Leitungsverbinders 1, 1 b des zweiten Leitungssatzes 60 zum Katalysator 75 geleitet dort direkt über eine Rücklaufleitung 77 zum Kühler 71 geleitet. Von dem Kühler fließt das Kühlwasser zurück in den Motor 70. In den Leitungssätzen 60 verlaufen das SCR-Fluid und das Kühlwasser gleichläufig im Innenrohr 2 bzw. im Außenrohr 3. Es wäre jedoch genauso denkbar das Kühlwasser umgekehrt und gegenläufig zum SCR-Fluid durch die Leitungssätze 60 fließen zu lassen.

Bei den Ausführungsbeispielen gemäß Fig. 5, Fig. 6 und Fig. 8 wird das Kühlwasser insbesondere auch zur Temperierung des SCR-Tanks 73 und der Dosierpumpe 74 verwendet. Genauso wäre es jedoch auch denkbar, dass das Kühlwasser nicht in diesen Bauteilen verwendet wird und stattdessen die Anschlusselemente 45 der Leitungsverbinder 1, 1b der verschiedenen Leitungssätze 60 direkt miteinander verbunden sind. Genauso wäre es möglich auch den Katalysator 75 mit Kühlwasser zur Temperierung mittels eines Leitungssatzes 60 zu versorgen.

## Patentansprüche

1. Leitungsverbinder (1, 1 b) mit zwei voneinander getrennten Strömungswegen zur Verbindung einer Rohr-in-Rohr Leitung mit einer ersten Leitung, insbesondere für ein Funktionsmedium, und einer zweiten Leitung, insbesondere für ein Temperiermedium, umfassend ein inneres Verbindungselement (12) zum Verbinden eines Innenrohres (2) der Rohr-in-Rohr Leitung, ein äußeres Verbindungselement (34) zum Verbinden eines Außenrohres (3) der Rohr-in-Rohr Leitung, ein erstes Anschlusselement (6) zum Anschließen der ersten Leitung an den Strömungsweg des Innenrohres (2) und ein zweites Anschlusselement (45) zum Anschließen der zweiten Leitung an den Strömungsweg des Außenrohres (3), wobei das äußere Verbindungselement (34) an einem separaten Rohradapterteil (7, 7b) und das zweite Anschlusselement (45) an einer separaten Verbindungshülse (9, 9b) jeweils einstückig ausgebildet sind,
**dadurch gekennzeichnet, dass**
das innere Verbindungselement (12) und das erste Anschlusselement (6) an einem separaten Anschlussteil (5, 5b) einstückig ausgebildet sind, wobei die Verbindungshülse (9, 9b) im montierten Zustand das Anschlussteil (5, 5b) und das Rohradapterteil (7, 7b) miteinander verbindet, und wobei die Verbindungshülse (9, 9b) im unmontierten Zustand über das Außenrohr (3) beidseitig und mit ihrem dem Anschlussteil (5, 5b) zugekehrten Ende über das Rohradapterteil (7, 7b) und auf das Anschlussteil (5, 5b) einseitig verschiebbar ausgebildet ist.

2. Leitungsverbinder (1, 1b) nach Anspruch 1,
**dadurch gekennzeichnet, dass**
zwischen dem Anschlussteil (5, 5b) und dem Rohradapterteil (7, 7b) in einem Bereich sich zugewandter Stirnseiten der jeweiligen Umfangswandungen ein Raum zur Herstellung einer zwischen dem inneren Verbindungselement (12) und dem Innenrohr (2) herzustellenden Schweißverbindung ausgebildet ist, wobei der Raum im unmontierten Zustand durch ein Verschieben der Verbindungshülse (9, 9b) über das Rohradapterteil (7, 7b) in Richtung des Außenrohres (3) von außen zugänglich ist und im montierten Zustand durch ein Verschieben der Verbindungshülse (9, 9b) über das Rohradapterteil (7, 7b) auf das Anschlussteil (5, 5b) verschlossen ist.

3. Leitungsverbinder (1, 1b) nach Anspruch 2,
**dadurch gekennzeichnet, dass**
sich das innere Verbindungselement (12) vom Anschlussteil (5, 5b) über die gesamte axiale Länge des Raumes bis zu der dem Anschlussteil (5, 5b) zugewandten Öffnung des Rohradapterteils (7, 7b) erstreckt.

4. Leitungsverbinder (1, 1 b) nach einem der Ansprüche 1 bis 3,
**dadurch gekennzeichnet, dass**
das innere Verbindungselement (12) einen hülsenförmigen Verbindungsstutzen (13) zum Einführen des Innenrohres (2) umfasst.

5. Leitungsverbinder (1, 1b) nach Anspruch 4,
**dadurch gekennzeichnet, dass**
das innere Verbindungselement (12) zumindest teilweise lasertransparent ausgebildet ist.

6. Leitungsverbinder (1, 1b) nach einem der Ansprüche 1 bis 5,
**dadurch gekennzeichnet, dass**
zwischen einer Umfangswandung des Anschlussteils (5, 5b) und dem Außenumfang des inneren Verbindungselementes (12) mehrere axial verlaufende und sich radial vom Außenumfang des inneren Verbindungselementes (12) zum Innenumfang des Anschlussteils (5, 5b) erstreckende Rippen (17) angeordnet sind.

7. Leitungsverbinder (1, 1b) nach einem der Ansprüche 1 bis 6,
**dadurch gekennzeichnet, dass**
das Rohradapterteil (7, 7b) im Inneren an einer Umfangswandung mehrere axial verlaufende und sich radial nach innen erstreckende Stützrippen (38, 38b) aufweist, die am Innenumfang des Rohradapterteils (7, 7b) umfangsgemäß verteilt angeordnet sind und eine an den Außendurchmesser des Innenrohres (2) angepasste radiale Höhe aufweisen.

8. Leitungsverbinder (1, 1b) nach einem der Ansprüche 1 bis 7,
**dadurch gekennzeichnet, dass**
das Anschlussteil (5, 5b) und die Verbindungshülse (9, 9b) im montierten Zustand über aneinander angepasste an Ihrem Umfang angeordnete Rastmittel (27, 27b, 51, 51b) zumindest in axialer und radialer Richtung miteinander verbunden sind.

9. Leitungsverbinder (1,1 b) nach einem der Ansprüche 1 bis 8,
**dadurch gekennzeichnet, dass**
die Verbindung zwischen dem Anschlussteil (5, 5b) und der Verbindungshülse (9, 9b) mittels Dichtmitteln am Außenumfang des Anschlussteils (5, 5b) und/oder am Innenumfang der Verbindungshülse (9, 9b) fluidisch dichtend ausgebildet ist.

10. Leitungsverbinder (1, 1 b) nach einem der Ansprüche 1 bis 9,
**dadurch gekennzeichnet, dass**
das Rohradapterteil (7, 7b) und die Verbindungshülse (9, 9b) im montierten Zustand über aneinander angepasste an Ihrem Umfang angeordnete Rastmittel (35, 53) zumindest in axialer und radialer Richtung miteinander verbunden sind.

11. Leitungsverbinder (1, 1 b) nach einem der Ansprüche 1 bis 10,
**dadurch gekennzeichnet, dass**
die Verbindung zwischen dem Rohradapterteil (7, 7b) und der Verbindungshülse (9, 9b) mittels Dichtmitteln am Außenumfang des Rohradapterteils (7, 7b) und/oder am Innenumfang der Verbindungshülse (9, 9b) fluidisch dichtend ausgebildet ist.

12. Leitungsverbinder (1, 1 b) nach einem der Ansprüche 8 bis 11,
**dadurch gekennzeichnet, dass**
die Rastmittel an der Verbindungshülse (9, 9b) und dem Rohradapterteil (7, 7b) und/oder dem Anschlussteil (5, 5b) derart ausgebildet sind, dass die Verbindungshülse (9, 9b) auf dem Rohradapterteil (7, 7b) und/oder dem Anschlussteil (5, 5b) verdrehbar gelagert ist.

13. Leitungsverbinder (1, 1 b) nach einem der Ansprüche 8 bis 11,
**dadurch gekennzeichnet, dass**
die Rastmittel an der Verbindungshülse (9, 9b) und dem Anschlussteil (5, 5b) derart ausgebildet sind, dass die Verbindungshülse (9, 9b) auf dem Anschlussteil (5, 5b) verdrehsicher fixiert ist.

14. Leitungsverbinder (1, 1 b) nach einem der Ansprüche 1 bis 13,
**dadurch gekennzeichnet, dass**
das Rohradapterteil (7, 7b) an dem dem Anschlussteil (5, 5b) abgewandten Ende als äußeres Verbindungselement (34) einen Einsteckstutzen (36) zum Verbinden mit dem Außenrohr (3) aufweist, wobei der Einsteckstutzen (36) insbesondere ein gezahntes Dornprofil (37) aufweist.

15. Leitungsverbinder (1, 1 b) nach einem der Ansprüche 1 bis 14,
**dadurch gekennzeichnet, dass**
das Rohradapterteil (7, 7b) an dem dem Anschlussteil (5, 5b) abgewandten Ende als äußeres Verbindungselement (34) einen hülsenförmigen Verbindungsstutzen aufweist, dessen Innenumfang an den Außenumfang des Außenrohres (3) angepasst ist, insbesondere für eine stoffschlüssige Verbindung zwischen dem äußeren Verbindungselement (34) und dem Außenrohr (3).

16. Leitungsverbinder (1, 1b) nach einem der Ansprüche 1 bis 15,
**dadurch gekennzeichnet, dass**
der Außendurchmesser des Anschlussteils (5b) im Bereich der Ringnut (21) größer als der Außendurchmesser des Rohradapterteils (7b) im Bereich der Dichtungsnut (31) ausgebildet ist.

17. Leitungsverbinder (1, 1 b) nach einem der Ansprüche 7 bis 16,
**dadurch gekennzeichnet, dass**
die Stützrippen (38b) des Rohradapterteils (7b) einen Stützbereich (40a) aufweisen, in dem die Höhe der Stützrippen (38b) an den Außenumfang des Verbindungsstutzens (13) des Anschlussteils (5b) angepasst ist, so dass die Außenwand des Verbindungsstutzens (13) in dem ersten Stützbereich (40a) mittig geführt werden kann.

18. Leitungssatz (60) umfassend eine Rohr-in-Rohr Leitung und mindestens einen an einem Ende der Rohr-in-Rohr Leitung angeordneten Leitungsverbinder (1, 1b) mit den Merkmalen eines der Ansprüche 1 bis 17.

## Claims

1. Line connector (1, 1 b) having two separate flow paths for connecting a pipe-in-pipe line to a first line, in particular for a functional medium, and to a second line, in particular for a temperature-control medium, comprising an inner connecting element (12) for connecting an inner pipe (2) of the pipe-in-pipe line, an outer connecting element (34) for connecting an outer pipe (3) of the pipe-in-pipe line, a first attachment element (6) for attaching the first line to the flow path of the inner pipe (2) and a second attachment element (45) for attaching the second line to the flow path of the outer pipe (3), wherein the outer connecting element (34) is formed in one piece on a separate pipe-adapter part (7, 7b) and the second attachment element (45) is formed in one piece on a separate connecting sleeve (9, 9b),
**characterized in that**
the inner connecting element (12) and the first attachment element (6) are formed in one piece on a separate attachment part (5, 5b), wherein the connecting sleeve (9, 9b), in the fitted state, connects the attachment part (5, 5b) and the pipe-adapter part (7, 7b) to one another, and wherein the connecting sleeve (9, 9b), in the non-fitted state, is designed such that it can be displaced over the outer pipe (3) on both sides and, by way of its end which is directed towards the attachment part (5, 5b), can be displaced over the pipe-adapter part (7, 7b), and onto the attachment part (5, 5b), on one side.

2. Line connector (1, 1 b) according to Claim 1,
**characterized in that,**
between the attachment part (5, 5b) and the pipe-adapter part (7, 7b), a space for establishing a weld connection to be established between the inner connecting element (12) and the inner pipe (2) is formed in a region of mutually facing end sides of the respective circumferential walls, wherein, in the non-fitted state, the space is accessible from the outside by virtue of the connecting sleeve (9, 9b) being displaced over the pipe-adapter part (7, 7b) in the direction of the outer pipe (3) and, in the fitted state, it is closed by virtue of the connecting sleeve (9, 9b) being displaced over the pipe-adapter part (7, 7b) onto the attachment part (5, 5b).

3. Line connector (1, 1b) according to Claim 2,
**characterized in that**
the inner connecting element (12) extends from the attachment part (5, 5b), over the entire axial length of the space, as far as that opening of the pipe-adapter part (7, 7b) which is directed towards the attachment part (5, 5b).

4. Line connector (1, 1b) according to one of Claims 1 to 3,
**characterized in that**
the inner connecting element (12) comprises a sleeve-like connecting piece (13) for introduction of the inner pipe (2).

5. Line connector (1, 1 b) according to Claim 4,
**characterized in that**
the inner connecting element (12) is of at least partially laser-transparent design.

6. Line connector (1, 1 b) according to one of Claims 1 to 5,
**characterized in that**
a circumferential wall of the attachment part (5, 5b) and the outer circumference of the inner connecting element (12) have arranged between them a plurality of axially running ribs (17), which extend radially from the outer circumference of the inner connecting element (12) to the inner circumference of the attachment part (5, 5b).

7. Line connector (1, 1 b) according to one of Claims 1 to 6,
**characterized in that**
the pipe-adapter part (7, 7b) has in its interior, on a circumferential wall, a plurality of axially running and radially inwardly extending supporting ribs (38, 38b), which are distributed over the inner circumference of the pipe-adapter part (7, 7b) and have a radial height adapted to the external diameter of the inner pipe (2).

8. Line connector (1, 1 b) according to one of Claims 1 to 7,
**characterized in that,**
in the fitted state, the attachment part (5, 5b) and the connecting sleeve (9, 9b) are connected to one another, at least in the axial and radial directions, via circumferentially arranged latching means (27, 27b, 51, 51 b), which are adapted to one another.

9. Line connector (1, 1 b) according to one of Claims 1 to 8,
**characterized in that**
the connection between the attachment part (5, 5b) and the connecting sleeve (9, 9b) is designed to provide fluidic sealing by way of sealing means on the outer circumference of the attachment part (5, 5b) and/or on the inner circumference of the connecting sleeve (9, 9b).

10. Line connector (1, 1 b) according to one of Claims 1 to 9,
**characterized in that,**
in the fitted state, the pipe-adapter part (7, 7b) and the connecting sleeve (9, 9b) are connected to one another, at least in the axial and radial directions, via circumferentially arranged latching means (35, 53), which are adapted to one another.

11. Line connector (1, 1 b) according to one of Claims 1 to 10,
**characterized in that**
the connection between the pipe-adapter part (7, 7b) and the connecting sleeve (9, 9b) is designed to provide fluidic sealing by way of sealing means on the outer circumference of the pipe-adapter part (7, 7b) and/or on the inner circumference of the connecting sleeve (9, 9b).

12. Line connector (1, 1 b) according to one of Claims 8 to 11,
**characterized in that**
the latching means on the connecting sleeve (9, 9b) and on the pipe-adapter part (7, 7b) and/or on the attachment part (5, 5b) are designed such that the connecting sleeve (9, 9b) is mounted in a rotatable manner on the pipe-adapter part (7, 7b) and/or on the attachment part (5, 5b).

13. Line connector (1, 1b) according to one of Claims 8 to 11,
**characterized in that**
the latching means on the connecting sleeve (9, 9b) and on the attachment part (5, 5b) are designed such that the connecting sleeve (9, 9b) is fixed against rotation on the attachment part (5, 5b).

14. Line connector (1, 1b) according to one of Claims 1 to 13,
**characterized in that,**
at the end which is directed away from the attachment part (5, 5b), the pipe-adapter part (7, 7b) has, as an outer connecting element (34), a plug-in connecting piece (36) for connection to the outer pipe (3), wherein the plug-in connecting piece (36) has, in particular, a toothed mandrel profile (37).

15. Line connector (1, 1 b) according to one of Claims 1 to 14,
**characterized in that,**
at the end which is directed away from the attachment part (5, 5b), the pipe-adapter part (7, 7b) has, as an outer connecting element (34), a sleeve-like connecting piece, of which the inner circumference is adapted to the outer circumference of the outer pipe (3), in particular for an integral connection between the outer connecting element (34) and the outer pipe (3).

16. Line connector (1, 1b) according to one of Claims 1 to 15,
**characterized in that**
the external diameter of the attachment part (5b) in the region of the annular groove (21) is designed to be greater than the external diameter of the pipe-adapter part (7b) in the region of the sealing groove (31).

17. Line connector (1, 1 b) according to one of Claims 7 to 16,
**characterized in that**
the supporting ribs (38b) of the pipe-adapter part (7b) have a supporting region (40a) in which the height of the supporting ribs (38b) is adapted to the outer circumference of the connecting piece (13) of the attachment part (5b), and therefore the outer wall of the connecting piece (13) can be guided centrally in the first supporting region (40a).

18. Set (60) of lines comprising a pipe-in-pipe line and at least one line connector (1, 1b) which is arranged at one end of the pipe-in-pipe line and has the features of one of Claims 1 to 17.

## Revendications

1. Raccord de conduite (1, 1b) comprenant deux voies d'écoulement séparées l'une de l'autre pour le raccordement d'une conduite tube dans tube à une première conduite, en particulier pour un milieu de travail et à une deuxième conduite, en particulier pour un milieu de régulation de température, comprenant un élément de raccordement interne (12) pour le raccordement d'un tube interne (2) de la conduite tube dans tube, un élément de raccordement externe (34) pour le raccordement d'un tube externe (3) de la conduite tube dans tube, un premier élément de raccordement (6) pour le raccordement de la première conduite à la voie d'écoulement du tube interne (2) et un deuxième élément de raccordement (45) pour le raccordement de la deuxième conduite à la voie d'écoulement du tube externe (3), l'élément de raccordement externe (34) étant réalisé au niveau d'une partie d'adaptateur de tube séparée (7, 7b) et le deuxième élément de raccordement (45) étant réalisé au niveau d'une douille de raccordement séparée (9, 9b), dans chaque cas d'une seule pièce,
**caractérisé en ce que**
l'élément de raccordement interne (12) et le premier élément de raccordement (6) sont réalisés d'une seule pièce au niveau d'une partie de raccordement séparée (5, 5b), la douille de raccordement (9, 9b), dans l'état monté, reliant l'une à l'autre la partie de raccordement (5, 5b) et la partie d'adaptateur de tube (7, 7b), et la douille de raccordement (9, 9b) étant réalisée de manière à pouvoir être déplacée dans l'état non monté par-dessus le tube externe (3) des deux côtés, et avec son extrémité tournée vers la partie de raccordement (5, 5b) par-dessus la partie d'adaptateur de tube (7, 7b) et sur la partie de raccordement (5, 5b) d'un côté.

2. Raccord de conduite (1, 1 b) selon la revendication 1,
**caractérisé en ce**
**qu'**un espace pour la réalisation d'une connexion soudée à réaliser entre l'élément de raccord interne (12) et le tube interne (2) est réalisé entre la partie de raccordement (5, 5b) et la partie d'adaptateur de tube (7, 7b) dans une région de côtés frontaux tournés l'un vers l'autre des parois périphériques respectives, l'espace, dans l'état non monté, étant accessible depuis l'extérieur par un déplacement de la douille de raccordement (9, 9b) par-dessus la partie d'adaptateur de tube (7, 7b) dans la direction du tube externe (3) et, dans l'état monté, étant fermé par un déplacement de la douille de raccordement (9, 9b) par-dessus la partie d'adaptateur de tube (7, 7b) sur la partie de raccordement (5, 5b).

3. Raccord de conduite (1, 1b) selon la revendication 2,
**caractérisé en ce que**
l'élément de raccordement interne (12) s'étend depuis la partie de raccordement (5, 5b) sur toute la longueur axiale de l'espace jusqu'à l'ouverture de la partie d'adaptateur de tube (7, 7b) tournée vers la partie de raccordement (5, 5b).

4. Raccord de conduite (1, 1 b) selon l'une quelconque des revendications 1 à 3,
**caractérisé en ce que**
l'élément de raccordement interne (12) comprend une tubulure de raccordement (13) en forme de douille pour l'insertion du tube interne (2).

5. Raccord de conduite (1, 1b) selon la revendication 4,
**caractérisé en ce que**
l'élément de raccordement interne (12) est réalisé de manière au moins partiellement transparente au laser.

6. Raccord de conduite (1, 1 b) selon l'une quelconque des revendications 1 à 5,
**caractérisé en ce**
**qu'**entre une paroi périphérique de la partie de raccordement (5, 5b) et la périphérie extérieure de l'élément de raccordement interne (12) sont disposées plusieurs nervures (17) s'étendant axialement et s'étendant radialement depuis la périphérie extérieure de l'élément de raccordement interne (12) jusqu'à la périphérie intérieure de la partie de raccordement (5, 5b).

7. Raccord de conduite (1, 1b) selon l'une quelconque des revendications 1 à 6,
**caractérisé en ce que**
la partie d'adaptateur de tube (7, 7b) présente à l'intérieur au niveau d'une paroi périphérique, plusieurs nervures de support (38, 38b) s'étendant axialement et s'étendant radialement vers l'intérieur, qui sont disposées de manière répartie sur la périphérie au niveau de la périphérie interne de la partie d'adaptateur de tube (7, 7b) et qui présentent une hauteur radiale adaptée au diamètre extérieur du tube interne (2).

8. Raccord de conduite (1, 1 b) selon l'une quelconque des revendications 1 à 7,
**caractérisé en ce que**
la partie de raccordement (5, 5b) et la douille de raccordement (9, 9b) sont raccordées l'une à l'autre au moins dans la direction axiale et radiale dans l'état monté par le biais de moyens d'encliquetage (27, 27b, 51, 51 b) adaptés les uns aux autres et disposés sur leur périphérie.

9. Raccord de conduite (1, 1b) selon l'une quelconque des revendications 1 à 8,
**caractérisé en ce que**
le raccordement entre la partie de raccordement (5, 5b) et la douille de raccordement (9, 9b) est réalisé de manière étanche aux fluides au moyen de moyens d'étanchéité sur la périphérie extérieure de la partie de raccordement (5, 5b) et/ou sur la périphérie intérieure de la douille de raccordement (9, 9b).

10. Raccord de conduite (1, 1b) selon l'une quelconque des revendications 1 à 9,
**caractérisé en ce que**
la partie d'adaptateur de tube (7, 7b) et la douille de raccordement (9, 9b) sont raccordées l'une à l'autre au moins dans la direction axiale et radiale dans l'état monté par le biais de moyens d'encliquetage (35, 53) adaptés les uns aux autres et disposés sur leur périphérie.

11. Raccord de conduite (1, 1b) selon l'une quelconque des revendications 1 à 10,
**caractérisé en ce que**
le raccordement entre la partie d'adaptateur de tube (7, 7b) et la douille de raccordement (9, 9b) est réalisé de manière étanche aux fluides au moyen de moyens d'étanchéité au niveau de la périphérie extérieure de la partie d'adaptateur de tube (7, 7b) et/ou au niveau de la périphérie interne de la douille de raccordement (9, 9b).

12. Raccord de conduite (1, 1b) selon l'une quelconque des revendications 8 à 11,
**caractérisé en ce que**
les moyens d'encliquetage sont réalisés au niveau de la douille de raccordement (9, 9b) et de la partie d'adaptateur de tube (7, 7b) et/ou au niveau de la partie de raccordement (5, 5b) de telle sorte que la douille de raccordement (9, 9b) soit supportée de manière rotative sur la partie d'adaptateur de tube (7, 7b) et/ou sur la partie de raccordement (5, 5b).

13. Raccord de conduite (1, 1b) selon l'une quelconque des revendications 8 à 11,
**caractérisé en ce que**
les moyens d'encliquetage sont réalisés au niveau de la douille de raccordement (9, 9b) et de la partie de raccordement (5, 5b) de telle sorte que la douille de raccordement (9, 9b) soit fixée de manière solidaire en rotation sur la partie de raccordement (5, 5b).

14. Raccord de conduite (1, 1b) selon l'une quelconque des revendications 1 à 13,
**caractérisé en ce que**
la partie d'adaptateur de tube (7, 7b) présente, au niveau de l'extrémité opposée à la partie de raccordement (5, 5b), en tant qu'élément de raccordement externe (34), une tubulure d'enfichage (36) pour le raccordement au tube externe (3), la tubulure d'enfichage (36) présentant notamment un profil de mandrin denté (37).

15. Raccord de conduite (1, 1b) selon l'une quelconque des revendications 1 à 14,
**caractérisé en ce que**
la partie d'adaptateur de tube (7, 7b) présente, au niveau de l'extrémité opposée à la partie de raccordement (5, 5b), en tant qu'élément de raccordement externe (34), une tubulure de raccordement en forme de douille, dont la périphérie interne est adaptée à la périphérie externe du tube externe (3), en particulier pour un raccordement par liaison de matière entre l'élément de raccordement externe (34) et le tube externe (3).

16. Raccord de conduite (1, 1b) selon l'une quelconque des revendications 1 à 15,
**caractérisé en ce que**
le diamètre extérieur de la partie de raccordement (5b) dans la région de la rainure annulaire (21) est réalisé de manière à être supérieur au diamètre extérieur de la partie d'adaptateur de tube (7b) dans la région de la rainure d'étanchéité (31).

17. Raccord de conduite (1, 1b) selon l'une quelconque des revendications 7 à 16,
**caractérisé en ce que**
les nervures de support (38b) de la partie d'adaptateur de tube (7b) présentent une région de support (40a), dans laquelle la hauteur des nervures de support (38b) est adaptée à la périphérie extérieure de la tubulure de raccordement (13) de la partie de raccordement (5b), de telle sorte que la paroi extérieure de la tubulure de raccordement (13) puisse être guidée centralement dans la première région de support (40a).

18. Jeu de conduites (60) comprenant une conduite tube dans tube et au moins un raccord de conduite (1, 1b) ayant les caractéristiques de l'une des revendications 1 à 17, disposé au niveau d'une extrémité de la conduite tube dans tube.
